# EUROPEAN PATENT SPECIFICATION

(11) **EP 4 485 033 B1**
(45) Date of publication and mention of the grant of the patent: **25.11.2026**
(21) Application number: 24184942.1
(22) Date of filing: 27.06.2024
(51) Int. Cl.: G02B 7/00, G02B 7/18, G02B 7/02

(54) **LIGHT DIRECTING DEVICE HAVING IMPROVED TEMPERATURE MANAGEMENT**
LICHTLEITVORRICHTUNG MIT VERBESSERTER TEMPERATURVERWALTUNG
DISPOSITIF D'ORIENTATION DE LUMIÈRE AYANT UNE GESTION DE TEMPÉRATURE AMÉLIORÉE

(30) Priority: 27.06.2023 BE 202305526
(43) Date of publication of application: 01.01.2025
(73) Proprietor: Newson NV, 9200 Dendermonde (BE)
(72) Inventor: Van Biesen, Marc, 9200 Dendermonde (BE)
(74) Representative: Brantsandpatents bv

(56) References cited:
- JP-A- 2016 509 343
- US-A1- 2012 160 002
- US-A1- 2013 141 707
- US-A1- 2023 081 234

## Description

### FIELD OF THE INVENTION

The invention pertains to the technical field of positioning apparatus for an optical element and methods for positioning an optical element, more in particular an apparatus capable of rotating and/or shifting an optical element with respect to an optical beam axis, wherein an improved temperature management system is provided.

### BACKGROUND

Apparatuses for positioning optical elements within an optical beam axis are necessary in many applications, in particular in applications concerned with laser manipulation processes such as laser scanning, laser engraving, laser marking, laser ablation or laser etching, but also other application which necessitate deflection of a light beam, whether incoherent, coherent or partially coherent, according in a controllable manner.

An apparatus for positioning an optical element typically comprises a positionable part which is mounted to a static base part in a moveable manner by a suspension system, whereby the position of the positionable part with respect to the base part can be changed by means of an actuation system. Such an apparatus is for instance described in WO2015192914.

Furthermore US20130141707 describes an extreme ultraviolet (EUV) lithographic projection system that minimizes thermal deformation in its mirrors. The invention utilizes reflective optical elements, which possess a "zero cross temperature" where their thermal expansion is effectively zero. To maintain optical precision, the system employs temperature sensors and heaters to actively hold the mirrors at their specific zero cross temperature during operation. The active thermal management significantly reduces wavefront aberrations caused by heat from the EUV light source, enabling the high-resolution patterning necessary for advanced semiconductor manufacturing.

A substantial problem lies in the fact that the optical parts interact with lasers, and more particularly high-power lasers that run for the major part of the time, typically 24 hours per day, 7 days in the week. While these optical parts typically reflect the laser beams with an extremely high efficiency, this is never perfect, with costs for efficiency increasing exponentially. As such, especially when dealing with high power lasers, the small fraction of energy of the laser beam that is not reflected, is absorbed by the optical part (or sometimes even let through), creating a substantial heat buildup in the optical part which reradiates this deeper into the device, and/or transfer this through thermal bridges to the device. A substantial risk, aside from damage to the optical part which is also undesirable, is that the more fragile (and expensive) components of the device (motor, actuators, PCBs, etc.) can be damaged by this heat. In less extreme cases, the heat could also influence the operation of the device, resulting in incorrect or variable actuations exerted on the optical part.

The present invention aims to resolve at least some of the problems and disadvantages mentioned above. The aim of the invention is to provide a method which eliminates those disadvantages. The present invention targets at solving at least one of the aforementioned disadvantages.

### SUMMARY OF THE INVENTION

The present invention provides for a device according to claim 1. The optical element positioning device comprises a substantially flat, positionable part to which the optical element can be mounted at a first side of the positionable part, a base part, a suspension system, said positionable part being mounted on said base part in a movable manner with said suspension system, wherein the positionable part is facing the base part with a second side opposite to the first side, an actuation system for actuating movement of said positionable part with respect to said base part, and a control system for controlling movement of said positionable part. The device furthermore comprises a contactless temperature sensor for measuring the temperature of the optical element, said sensor being positioned behind the positionable part with respect to the optical element, and is oriented towards the optical element.

The suspension and actuation system allows the device to manipulate the orientation of the positionable part, and thereby of the optical element that is mounted thereon. By doing so, the device can manipulate incident light beams in a desired way.

As stated previously, a substantial risk exists in heat buildup from energy absorption or transmittal past the optical element (typically a mirror with one or more coatings to optimize reflection). Even if only 0.1% of the incident energy doesn't get reflected, with a 10.000 W laser, this means a 10 W energy being retained, and being converted mostly into heat. In order not to damage the optical element, the fragile components and/or influence the workings of the device to such an extent that it's no longer reliable and its resulting products are to be discarded, careful temperature management is necessary.

The applicant has noted that direct temperature sensing via contact is extremely difficult, both in terms of the high heat, the interference of incident light (laser) beams, and importantly, due to the lack of free space at the positionable part/optical element. Positioning a contactless temperature sensor also suffers from the drawback of the interference of the incident light beams, making readings unreliable. As a result, the applicant provided for indirect, contactless temperature sensing, from behind the optical element and even behind the positionable part, thereby shielding the temperature sensor itself from the incident light beams. By doing so, the temperature sensor can get a general reading of the temperature of the optical element, and the heat radiating from it, while being free from the interference of the high-power light beams impinging on the optical element.

Preferred embodiments of the device are shown in any of the claims 2 to 14. A specific preferred embodiment relates to an invention according to claim 7, wherein the contactless temperature sensor is a pyrometer. A pyrometer advantageously permits reliable measurement of the broad range of temperatures, in particular, the very high temperatures which the optical element of the device reaches. The, performance of a pyrometer is not affected by variations in the distance to the optical element, which is particularly advantageous considering the thermal expansion some of the elements of the device will incur during operation. Said distance also permits, advantageously, protecting the pyrometer and adjacent electronics from excessive thermal exposure.

### DESCRIPTION OF FIGURES

The following description of the figures of specific embodiments of the invention is merely exemplary in nature and is not intended to limit the present teachings, their application or uses. Throughout the drawings, corresponding reference numerals indicate like or corresponding parts and features.
**Figure 1** schematically presents cross-section of a first embodiment of the device.
**Figure 2** schematically presents cross-section of a second embodiment of the device.
**Figure 3** schematically represents a front view of the first embodiment of the device.
**Figure 4** schematically presents a front view of the second embodiment of the device.

### DETAILED DESCRIPTION OF THE INVENTION

The present invention concerns a device for positioning an optical element, having improved temperature management. The device aims to address, in particular, the adverse effects of prologued exposure of an optical element to high-power illumination devices, more in particular high-power laser beam incidence.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

The terms "axial direction" or "longitudinal direction" as used herein and throughout the description unless otherwise defined, refers primarily to the principal direction of the light which is to be directed or manipulated by the optical element which can be mounted on the present device. In case the light is to be deflected over a large angle, e.g. in the case the optical element is a mirror positioned at an angle of about 45° with the light beam, the longitudinal direction refers to the average direction of the light before and after the deflection. In the case an optical element which is mounted on the positionable part comprises an axial direction, e.g. in the case of a lens or a mirror where the axial direction is perpendicular to the surface in a geometric center of said surface, the axial direction can also be defined as being essentially parallel to the axial direction of the optical element. In an embodiment whereby the positionable part is suspended by at least three suspension systems at three positionable suspension locations, said positionable suspension locations define a positionable reference plane which is preferably arranged essentially perpendicular to the axial direction when the positionable part is in a resting position, i.e. no actuation is applied to the positionable part. Hereby, the axial direction can be defined by the direction perpendicular to said positionable reference plane. Analogously, the axial direction can also be defined by the direction perpendicular to the base reference plane of the base part. In most embodiments, at least some or all of the above definitions essentially coincide.

The terms "proximity sensor" or "distance sensor" as used herein and throughout this document are synonymous and refer to sensors or measurement devices which measure distances either directly or indirectly by measurement of a distance-dependent parameter. In the latter case, said distance sensors could preferably be implemented with a converting means for converting a value of said distance-dependent parameter into a value for the distance or vice versa. Such a conversion means could comprise an algorithm, e.g. as implemented on a processing unit.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The first aspect of the invention relates to a device for positioning an optical element, having improved temperature management, the device comprising:
- a substantially flat, positionable part to which the optical element can be mounted at a first side of the positionable part;
- a base part;
- a suspension system, said positionable part being mounted on said base part in a movable manner with said suspension system, wherein the positionable part is facing the base part with a second side opposite to the first side; and
- an actuation system for actuating movement of said positionable part with respect to said base part, and
- a control system for controlling movement of said positionable part;
The device comprises a contactless temperature sensor for measuring the temperature of the optical element. Said sensor is positioned behind the positionable part with respect to the optical element, and is oriented towards the optical element. The device advantageously permits temperature management of not only the optical element, but also of the whole device, thereby greatly extending the service life of the device. The advantageous location of the temperature sensor also permits avoiding any interference or even damage to said sensor, which would otherwise occur, should the sensor be exposed to any residual laser light traversing the whole thickness of the optical element.

In an embodiment, the contactless temperature sensor is located in a substantially central hole through the base part, preferably (at least partially) in an axial cavity in the base part. Advantageously, while the front-facing side of the device is densely packed with components, leaving little room for additions, the base part however providing more available room, and especially along its central axis. Interestingly, this is also the optimal position for the temperature sensor in most embodiments, as the sensor can be directed at the central part of the optical element, and the positionable part can be most easily provided with holes in the center, where there are essentially no components or wiring present (that can't be moved elsewhere), as opposed to the periphery of the positionable part, wherein most embodiments, conducting coils are provided for carrying a current. The temperature sensor can be shielded optimally in such an embodiment from interference, especially from the high power light source.

In a preferred embodiment, the positionable part comprises at least one, preferably multiple, centrally-positioned through-hole. Preferably, said through-hole are positioned within the boundaries of a projection of the optical element perpendicularly onto the positionable part. The through-holes allow the temperature sensor to detect the temperature of the heated optical element, whether it is via a direct line-of-sight measurement of the temperature sensor to the optical element, or indirect measurement of the temperature, by detection of thermal radiation of the optical element through the through-holes without a line-of-sight, or even heat transfer from the optical element, through the positionable part via conduction towards the second side thereof, and subsequent measuring the temperature at said second side. In some cases where direct measurement is impossible, it will be necessary to account for this. However, with a simple calibration at any point in time, the relationship between the temperature of the optical element and the detected temperature by the temperature sensor can be established for future use.

Typically, the optical element is also positioned centrally on the positionable part, which means that the through-holes are positioned directly beneath the optical element (center), which is usually the position where the light beam impinges on the optical element, making this the hottest position, and generating the most interesting information about the temperature.

In a possible embodiment, only one single through-hole is provided. The dimensions thereof can differ, depending on the size of the positionable part and the available space with respect to other components and wiring thereon. However, it is preferred to maximize the opening, without of course endangering the structural strength of the positionable part. By maximizing the opening, optimal line of sight is ensured. Additionally, this creates a pathway for the heat of the optical element to escape, thus assisting in the cooldown of the optical element. In some embodiments, the device can comprise specific cooling systems therefor, such as ventilation elements like a fan, and/or a liquid cooling system, thermal sinks, ...

In another possible embodiment, two or more through-holes are provided, such as three, four, five, six or even more. The through-holes can be provided in a symmetrical way, forming one or more rings around the center of the positionable part, although other configurations are also possible.

Again, the total opening area created by the through-holes is preferably maximized, for the same reasons as mentioned above.

In a particular embodiment, the positionable part comprises centrally positioned through-holes, which are positioned around the center of the positionable part, with the center however not being open in the sense that it does not allow transmission of light. The through-holes can for instance be positioned in a ring around the center. This embodiment makes sure that the incident light beam does not interfere (too strongly) with the temperature sensor by a direct incidence thereon.

In other embodiments, the temperature sensor is positioned such that it is shielded by a 'full' section of the positionable part, thereby ensuring that there is no direct interference from the incident light beam should the optical element be in transmission mode, or from the fraction of the incident beam that does not get reflected or absorbed. Most preferably however, the sensor is positioned centrally.

In a preferred embodiment, said suspension system comprises a number of suspension elements which is a multiple of three, such as 3, 6, 9, 12 or more, preferably whereby said suspension elements are divided in three groups of n suspension elements, n being any strictly positive integer number, such as 1, 2, 3, 4 or more.

In an embodiment, said actuation system comprises at least one actuation element, such as 1, 2, 3, 4, 5, 6, 7, 8, 9 or more actuation elements, more preferably at least three actuation elements. In a preferred embodiment the actuation system comprises one actuation element for each suspension element or for each group of suspension elements. In a preferred embodiment, the actuation system comprises a number of actuation elements which is a multiple of three, such as 3, 6, 9, 12 or more, preferably whereby said actuation elements are divided in three groups of m actuation elements, m being any strictly positive integer number such as 1, 2, 3, 4 or more, whereby preferably each group of actuation elements is arranged to cooperate.

In a preferred embodiment, at least one and preferably each actuation element comprises p conductive coils, preferably connected in series, and q magnets, preferably permanents magnets, whereby p and q are strictly positive integer numbers, such as 1, 2, 3, 4, 5, 6, 7, 8, 9, 10 or more. More preferably, p is a multiple of q, such as p being equal to q, 2q, 3q, 4q or more. Most preferably, at least one and preferably each actuation element comprises 2 permanent magnets and 2 or 4 conductive coils positioned on said positionable part essentially longitudinally next to or near a pole of said magnets. Preferably said coils comprise 1 or more loops or windings, such 1, 2, 3, 4, 5, 6, 7, 8, 9, 10 loops or more.

In a preferred embodiment, the actuation system comprises three actuation elements, each comprising p conductive coils and/or q magnets as described here above. Therefore, preferably the actuation system comprises a total number of conductive coils which is a multiple of three, such as 3, 6, 9, 12 or more, and/or a total number of magnets which is a multiple of three, such as 3, 6, 9, 12 or more.

In a preferred embodiments, said one or more magnets comprise a north-south pole direction along an essentially longitudinal direction.

In a particularly preferred embodiment, 2 or more magnets, preferably permanent magnets, of an actuation element are disposed in an alternated pole arrangement, i.e. whereby a first magnet comprises a north pole at a proximal end, i.e. an end located near the positionable part, and a south pole at a distal end, e.g. an end located longitudinally away from the positionable part along a longitudinal direction, and whereby a second magnet, which neighbors the first magnet, comprises a south pole at the proximal end and a north pole at the distal end. Such an alternating-pole arrangement ensures that the combined magnetic field of the magnets is increased nearby the proximal ends, and thus nearby the positionable part, while the combined magnetic far-field, i.e. at long distances, is limited. This leads to a reduction of energy during operation as the high field values near the positionable part require smaller currents through the conductors of the actuating elements on the positionable part, and also leads to increased safety as the far-field is negligible and allows e.g. paramagnetic or diamagnetic material to be used relatively nearby the apparatus.

In an embodiment, said apparatus comprises a control system for controlling movement of said positionable part. Said control system hereby preferably comprises means for controlling the electrical current flowing through an electrical conductor of an actuation element, preferably controlling the electrical current flowing through each of said electrical conductors of said actuation elements. Said control system also preferably comprises a sensing system for measuring the position of the positionable part, preferably the sensing system comprising at least three sensing elements, which allow measurement of the full 3D position of the positionable part. In a particularly preferred embodiment, said control system comprises one or more regulating systems, preferably comprising a feedback mechanism, e.g. a proportionate (P), an integrating (I) or a derivating (D) regulating system, or any combination thereof, in particular one or more PID regulating mechanisms, which allows steering of the movement by e.g. steering the electrical currents through said electrical conductors of said actuation elements, said movement following a target movement or a set of target positions for said positionable part, taking into account the actual position of said positionable part as measured by the sensing system.

In a particularly preferred embodiment, at least one sensing element of said sensing system comprises a high-frequency electrical signal generator which is arranged to make a high-frequency current component flow through an electrical conductor, preferably an electrical coil, on said positionable part, said electrical conductor preferably being an electrical conductor of an actuation element, and said sensing element comprising an induction-based proximity or distance sensor, preferably located on the base part, more preferably longitudinally near or next to said conductors on the positionable part. Hereby the proximity sensor preferably comprises a static coil, which is capable of picking up the energy, in the form of an induced current, at high-frequency from the electrical conductor via magnetic induction, the magnitude of which depends on the distance between the electrical conductor on the positionable part and the proximity sensor or its static coil. Preferably said static coil is mounted near or on top of a magnet, preferably the permanent magnet, of an actuation element. Preferably a proximity sensor is provided on each or on at least three of said magnets of said actuation elements.

In a possible embodiment, the positionable part comprises a thermal bridge from the first side to the second side. The thermal bridge can be in the form of a single thermally conductive pathway, or in the form of a plurality thereof. For instance, the central section of the positionable part can be entirely replaced by a thermally conductive section. Alternatively, a plurality of through-holes can be present (again, preferably in the central section of the positionable part), which are filled with a thermally conductive material, for instance in the form of a via (vertical interconnect access). By doing so, incident light is blocked for the temperature sensor, while heat transfer is still possible from the first side to the second side, allowing the temperature sensor to detect heat from the optical element. In most preferred embodiments, the positionable part is explicitly connected to the optical element via a thermal bridge, for instance in the form of thermal paste, metallic connections, etc., to ensure optimal heat transfer.

In a more preferred embodiment, the second side or back side of the positionable part is provided with a thermally conductive surface covering, at least at a central section thereof, in thermal connection with the first side via the thermal bridge(s).

Doing so provides a large area to which the heat from the optical element is transferred, which is especially convenient in case a cooling system is provided at the base part, for instance in the form of a cool air flow aimed at said second side. A larger surface allows for more cooling.

In a preferred embodiment, the actuation system comprises at least one actuation element which comprises an electrical conductor, preferably an electrically conductive coil, mounted on the positionable part, and one or more magnets, preferably permanent magnets, mounted on the base part near said conductor, preferably essentially longitudinally next to said conductor. Preferably, said conductors are positioned in the peripheral zone of the positionable part. Similarly, the magnets are preferably positioned non-centrally (peripheral) on the base part. In this way, the conductors are advantageously placed on the area of the positionable part with the lowest heat incidence, thereby reducing the risk of damage to the delicate electrical conductors. By positioning the magnets in a peripheral are of the base part, and in substantial alignment with the conductor elements, more space is made available for the axial hole of the base, thus also for the temperature sensor. The superior alignment between the electrical conductors and magnets, advantageously permits avoiding the rotation of the optical element about the longitudinal axis of the device. This limits the motion of the optical element to precise tilting motions, greatly improving the accuracy of the device.

In a preferred embodiment, the positionable part comprises a plurality of actuator coils at a peripheral zone thereof, and one or more magnets, preferably permanent magnets, mounted on the base part near said actuator coils, preferably essentially longitudinally next to said actuator coils, wherein the through-holes are positioned in a central zone of the positionable part, surrounded by the peripheral zone. In this way, the temperature sensor is positioned in the most advantageous central position where it can more promptly and accurately measure the temperature of the optical elements.

The actuator coils in the positionable part combined with the magnets, allow for a fast and accurate positioning of the positionable part. When creating a current in one or more of the actuator coils, this interacts with the magnets, which results in a Lorentz force acting on the coil, thereby moving the positionable part. While the technique is applicable on conductors in general, the use of coiled conductors allows for a much stronger force and thereby faster movement, even when only driving low current through the coil(s). The governing principles are described amongst others in WO2015192914A1.

In a preferred embodiment, the at least one through-hole of the positionable part has a diameter of at least 0.25 mm, preferably at least 0.5 mm, more preferably at least 1.0mm, more preferably at least 2.0mm, even more preferably at least 3.0 mm, or even 4.0 mm, even more preferably at least 5.0 mm, 6.0 mm, 7.5 mm or even 10.0 mm. Sufficiently wide through-holes allow for better cooling and/or provide for a wider path for heat transfer to the other side of the positionable part.

More preferably, the through-holes are dimensioned with a diameter at least equal to half of the thickness of the positionable part, allowing the sensor to detect the temperature of the optical element optimally. Even more preferably, the diameter is at least 75% of said thickness, and most preferably, the thickness is equal to or greater than said thickness of the positionable part. It should be noted that such dimensions are optimal for through-holes which are open, although it can apply to closed, thermally conductive through-holes as well.

In a preferred, embodiment, the temperature sensor is oriented towards at least one of the through-holes of the positionable part, to increase the accuracy of the measurements.

In an alternate embodiment, as discussed further in the document, the through-holes are filled with a thermally conductive material, acting as a thermal bridge through the positionable part. In some embodiments, these filled through-holes are similar to or equal to vias (vertical interconnect access), having similar dimensions and material infill. The diameter of such through-holes are typically at least 0.1 mm, preferably at least 0.2 mm, but are preferably kept below 1.0 mm, or even below 0.75 mm or 0.5 mm. However, it should be noted that the diameter may be smaller or larger than the aforementioned values.

In a preferred embodiment, the contactless temperature sensor is a (contactless) infrared (IR) sensor.

In a further preferred embodiment, the contactless temperature sensor is a pyrometer. Pyrometer sensors can measure temperature without physical contact with the object being measured. This is particularly useful when measuring the temperature of moving objects, extremely hot objects, or objects that are difficult to access. Non-contact measurement eliminates the need for probes or thermocouples, making it more convenient and reducing the risk of damage to the sensor. Furthermore, pyrometer sensors can measure a wide range of temperatures, from low to extremely high temperatures, depending on the specific model and design. They can accurately measure temperatures ranging from several hundred degrees Celsius to several thousand degrees Celsius. This makes them suitable for applications where other sensors may not be able to handle the temperature extremes. By preference, the pyrometer sensor has a temperature measurement range between -20°C and 1200°C, more preferably between 10°C and 1000°C, between 20°C and 900°C, between 25°C and 800°C, most preferably between 30°C and 700°C. In this way, the measurable temperature range provides ample margin between the lower measurable temperature and any of the recommended operational temperatures of any of the other components of the device. Pyrometer sensors are also quick to detect and respond to temperature changes, making them suitable for applications that require real-time monitoring or control. The fast response time allows for quick adjustments and interventions, which is crucial in processes where temperature changes can occur very fast. In this way, even when temperature vary very fast, the device is kept from reaching dangerous temperatures, thus keeping all elements of the device safe from damage.

In an embodiment, at least three through-holes are comprised in the positionable part, said through-holes being positioned symmetrically in the central part of the positionable part. The central position of the through holes advantageously avoid interfering with the position of the electrical conductors. Said central positioning of the through holes also advantageously permits a most advantageous cooling effect, allowing colder air to flow directly against the central area of the optical element, which area is the most likely to be substantially warmer than the more peripheral area of the optical element.

In an embodiment, the suspension system comprises at least three mechanical suspension elements, each suspension element comprising a leaf spring. By preference, which forms part of the conductor.

In another preferred embodiment, said suspension element is a mechanical suspension element which is provided with at least one electrical pathway, e.g. a metallic strip or wire, e.g. a cupper or iron strip or wire.

In a preferred embodiment, the suspension elements, for instance in the form of leaf springs, comprise hybrid flexible arms, i.e. flexible arms constructed from electrically insulating foil material. Different electrical conducting tracks routed on this material can be used to integrate several electrical connections on a single suspension element or a single flexible arm. The spring configuration enables the positioning element to advantageously returns to its initial position when no actuating force imparted to it by the interaction of the interaction between the magnets and a current passing through an actuator coil. In said initial position, the axis of the positionable part is by preference substantially aligned with the longitudinal axis of the device. By preference, the leaf springs are identical, in this way allowing for a predictable movement of the positionable part, while one or more actuator coils are traversed by a current. This further contributes to the high accuracy of the device.

In an embodiment, the device further includes a layer of thermal paste between optical element and the positionable part, said layer covering at least the through-holes of the positionable part. By preference, said thermal paste is in contact with both the central area of the positionable element and the surface of the optical element. More preferably, the thermal paste layer does not cover the peripheral area of the positionable element, thereby advantageously avoiding heat transfer to the actuator coils. This layer of thermal paste advantageously allows the temperature sensor to measure the temperature of the optical element without the need to have a direct line of sight with said optical element. In this way, any residual light passing through said optical element is no longer going to affect the readings of the temperature sensor. Instead, temperature is advantageously measured on the surface of the thermal paste exposed on the temperature sensor side through any of the through-holes of the positionable elements. By preference, the thermal paste extends towards the sensor side of the positionable element at least half the depth of the through-holes, more preferably the full depth of the through-holes. Most preferably, the thermal paste extending through the through-holes is flush with the sensor side of the positionable element. In this way, access to a temperature measurement surface is advantageously improved, as the thermal paste facing the sensor is easily accessible to the sensor. The thermal paste, due to its fast temperature transfer capabilities, improves also the cooling of the optical element. The thermal paste is preferably a non-metallic thermal paste, more preferably ceramic-based thermal paste, most preferably a metal-based thermal paste.

In an embodiment, the positionable part comprises a thermally conductive, preferably metal, plate at the first side facing the optical element, and a thermally conductive, preferably metal, plate at the second side facing away from the optical element, and wherein said thermally conductive plates on the first and second sides are thermally connected through the positionable part via at least one, and preferably a plurality of, thermally conductive connections in the through-holes, preferably thermal vertical interconnect accesses (vias), and wherein said temperature sensor is oriented towards the thermally conductive plate on the second side. In this way, heat is faster and more reliably transferred between both sides of the positionable part, thus allowing for a faster and more accurate reading of the temperature of the optical element. This further permits a faster intervention in the case that the temperature of the optical element reaches a dangerous value.

In a preferred embodiment, the device further includes a layer of thermal paste between optical element and the positionable part, said layer covering at least the through-holes of the positionable part, the positionable part comprising a thermally conductive, preferably metal, plate at the first side facing the optical element, and a thermally conductive, preferably metal, plate at the second side facing away from the optical element, and wherein said thermally conductive plates on the first and second sides are thermally connected through the positionable part via at least one, and preferably a plurality of, thermally conductive connections in the through-holes, preferably thermal vertical interconnect accesses (vias), and wherein said temperature sensor is oriented towards the thermally conductive plate on the second side. By preference the thermal paste covers the whole area of the thermally conductive plate. In this way, heat is transferred faster and even more reliably between both sides of the positionable part, thus allowing for a faster and more accurate reading of the temperature of the optical element. This further permits a faster intervention in the case that the temperature of the optical element reaches a dangerous value. Cooling of the optical element is also advantageously improved.

In an embodiment, the controlling system is able to send a signal to a system comprising the device, said signal including information to cause the shutdown of the system if the temperature of the optical element reaches a predetermined temperature, said predetermined temperature preferably stored in a memory section of the controlling system. By preference, said predetermined temperature includes a safety margin expressed as a decimal coefficient, which coefficient, once multiplied by the highest allowable temperature inside the device, gives the predetermined temperature. The safety margin accounts for any measurement delays due to the geometry and thermal conductivity of the materials of the optical element. More preferably, the safety margin further accounts for any measurement delay due to the materials between the optical element and the positionable part, and geometry of the through holes of said positionable part.

In an embodiment, the device is configured for sending a shutdown signal for an associated light-emitting device, preferably a laser device, irradiating the optical element, if the measured temperature of the optical element exceeds a predetermined temperature. Alternatively, it may simply communicate the measure temperature itself to the light-emitting device, which itself is configured to shut down upon detecting the measured temperature exceeds a predetermine temperature stored at the light-emitting device, or a system associated thereto. Again, this is provided in order to ensure that the light-emitting device does not overheat the optical element to a point where it could be (critically) damaged, or could critically damage other fragile parts in its vicinity or integrated therein, such as motors, PCBs, etc.

In an embodiment, the device comprises an airflow generating element configured for generating an airflow at and through the through-holes, for cooling the optical element, said airflow generating element preferably positioned at the base part, more preferably in an axial cavity thereof. In this way, cooling of the optical element and any other adjacent elements of the device is advantageously promoted, allowing for a longer service life and significantly fewer stoppages due to overheating.

In an embodiment, wherein the device comprises an airflow generating element configured for generating an airflow aimed at the second side of the positionable part, said airflow generating element preferably positioned at the base part, more preferably in an axial cavity thereof. By preference, said air flow is aimed towards at least one thermal paste or conductive material plate of said second side of the positional part. Most preferably, said air flow is aimed towards at least one thermal paste and conductive material plate of said second side of the positional part. In this way, cooling of the optical element and any adjacent elements of the device is advantageously improved.

In an embodiment, the positionable part comprises or is a positionable plate, and/or preferably comprises a circuit board, preferably a printed circuit board (pcb) or a rigid material, e.g. a reinforced material such as a fiber reinforced material, e.g. reinforced with glass and/or carbon fibers, onto which other components can be mounted, such as electrical conductors. In a preferred embodiment, said conductors comprise metal conductors, preferably cupper or aluminum conductors.

In an embodiment, the base part comprises a base plate, and/or preferably comprises a circuit board, preferably a printed circuit board, onto which preferably said static coils of said distance sensors are disposed.

In a preferred embodiment, two, three or more of said suspension elements are at least partially independent from each other, thereby allowing at least partially independent movement of one or more of said positionable suspension locations, preferably along a longitudinal or axial direction. Such at least partially independent suspension elements allow movement of the positionable part in a very controllable manner.

Preferably said positionable suspension locations of at least three suspension elements are arranged in a positionable reference plane which constitutes a reference plane for the orientation of the positionable part, i.e. the position of the positionable reference plane is in a one-to-one correspondence with the position of the positionable part. Preferably said base suspension locations of at least three suspension elements are arranged in a base reference plane which constitutes a reference plane for the orientation of the base part, i.e. the position of the base reference plane is in a one-to-one correspondence with the position of the base part.

Preferably said positionable and/or base suspension locations and/or said suspension elements are arranged in an essentially regular polygonic set-up, e.g. a regular triangle, a square, or a regular pentagon, hexagon, heptagon, octagon, nonagon, decagon, etc..

In a preferred embodiment, an optical element is mounted on said positionable part, said optical element preferably comprising any or any combination of the following: an aperture, a mirror, a lens, a mirroring lens, an optical flat, a transparent optical flat, a group of lenses, a divergent lens, a convergent lens, a diffraction lens, a diffraction grating, a set of apertures, a prism.

In a preferred embodiment, the device is integrated into a system which further comprises a light-emitting device, preferably a laser device, which is configured for generating a light beam that directly or indirectly impacts the optical element. The system is further configured to shut down the light-emitting device upon detection of the measured temperature exceeding a predetermined temperature.

In a second aspect, the invention pertains to a method for positioning an optical element with a device therefor, with an improved temperature management.

The device has a substantially flat, positionable part to which the optical element can be mounted at a first side of the positionable part, a base part and a suspension system, said positionable part being mounted on said base part in a movable manner with said suspension system, wherein the positionable part is facing the base part with a second side opposite to the first side, with an actuation system for actuating movement of said positionable part with respect to said base part and a control system for controlling movement of said positionable part. Furthermore, the device comprises a contactless temperature sensor for measuring the temperature of the optical element, said sensor being positioned behind the positionable part with respect to the optical element, and is oriented towards the optical element. The method comprises the steps of measuring the temperature with the contactless temperature sensor, the measured temperature being processed, typically by the control system, and if the measured temperature exceeds a predetermined threshold temperature, taking action with respect to the operation of the device and/or systems with which it interacts.

The action that is taken can be set by the user, and is typically one or more of the following: signaling an alert (auditive, visual, tactile and/or others), taking cooling actions (for instance generating an air flow, as discussed in the description), reduction of power used by a light beam (laser) source, full shutdown of the light beam (laser) source, etc.

In some variations, multiple thresholds are set, with different actions being taken at the thresholds (for instance, signaling an alert at a lower threshold, with a partial or full shutdown taking place at a higher threshold, and/or with cooling actions being undertaken at certain thresholds).

As mentioned, the positionable part can be embodied in two variations: a first where an opening (or multiple) is provided that allows the sensor to "see" through it, and detect radiated heat from the optical element itself, and a second, wherein the opening (or multiple) is substantially filled with a heat-conducting material, to transfer heat from the optical element to the second side of the positionable part, to allow the sensor to detect the heat from the optical element indirectly.

Preferably, the device of the method is a device according to the first aspect of the invention, with all variations discussed being applicable to the method as well.

The invention is further described by the following non-limiting examples which further illustrate the invention, and are not intended to, nor should they be interpreted to, limit the scope of the invention.

The present invention will be now described in more details, referring to examples that are not limitative.

### EXAMPLES AND DESCRIPTION OF FIGURES

With as a goal illustrating better the properties of the invention the following presents, as an example and limiting in no way other potential applications, a description of a number of preferred embodiments based on the invention, wherein:

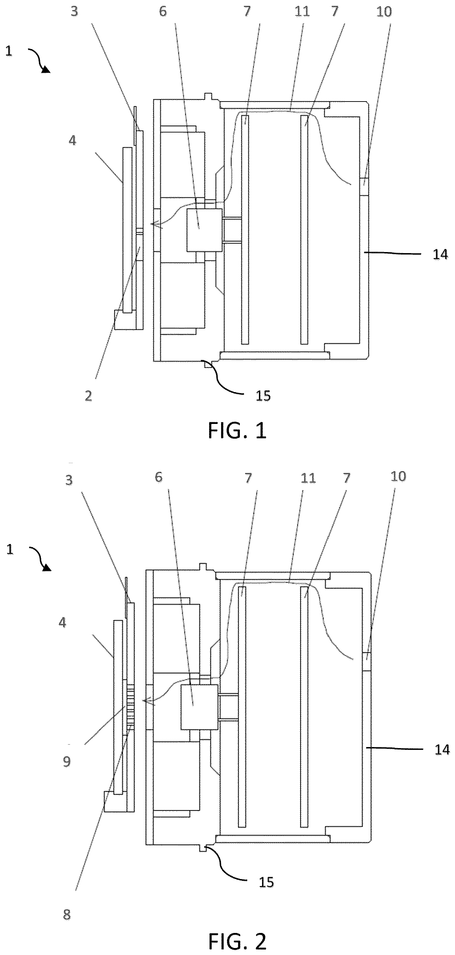

FIG. 1 schematically presents cross-section of a first embodiment of the device (1). The figure shows a base element (15) in attachment with a case (14), said case (14) containing regulator electronics (7). One of which regulator electronics (7) is closest to the base (15) and comprises the temperature sensor (6) advantageously aligned with an axial hole of the base (15). The regulator electronics (7) and temperature sensor (6) are shown sufficiently distanced from the base (15) and the case (14) so as to advantageously provide ample space for air admitted via the air inlet (10) to follow a trajectory (11) as shown in the figure. Said trajectory (11) advantageous include the passage of air through the axial hole of the base (15) and contact with the sensor (6) side of the positionable part (3). Said positionable part (3) further holds an optical device, which optical device is in this case a mirror (4). The positionable part (3) is provided with a plurality of through-holes located on a substantially central through-hole area (8). In a first embodiment, these through-holes permit further passage of air through the positionable element (3) and towards the mirror (4), thus greatly contributing to the cooling of said mirror (4).
FIG. 2 schematically presents cross-section of a second embodiment of the device (1). This embodiment differs from the first one shown in FIG. 1 in that the device further includes a layer of thermal paste (9 ) placed between the mirror (4) and the positionable part (3). In this way, permitting heat from the mirror (4) to reach the through-holes of the positionable part (3), allowing the temperature sensor (6) to measure the temperature of said mirror (4) while advantageously preventing exposure of the sensor (6) to any of the light falling upon the mirror (4). In this way, any interference with measurements taken by the sensor (6) and/or any damage the latter might sustain due to exposure to said light is advantageously avoided.

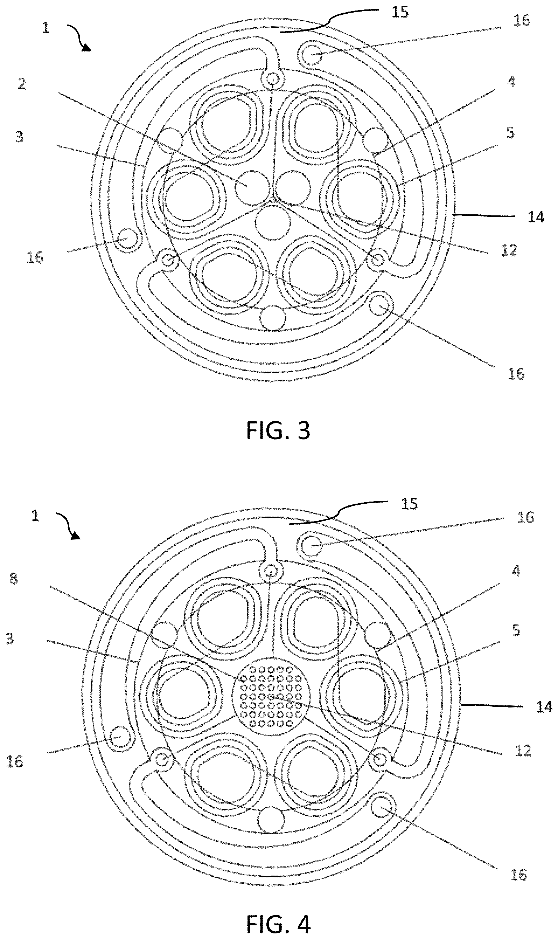

FIG. 3 schematically represents a front view of the first embodiment of the device (1). This figure shows in further detail the disposition of the trough holes (2) and the actuator coils (5) over the positionable part (3). Said positionable part (3) is shown supported above the base (15) by means of three leaf springs (16).
FIG. 4 schematically presents a front view of the second embodiment of the device (1). In this embodiment, the disposition pattern of the through-holes (2) is square as opposed to the disposition pattern of the through-holes (2) of the first embodiment, where said through-holes (2) are radially disposed. The present disposition of the through-holes (2) advantageously provides for a better retention of the thermal paste (9).

### List of numbered items:

- 1: device
- 2: through-holes
- 3: positionable part
- 4: mirror
- 5: actuator coils
- 6: temperature sensor
- 7: regulator electronics
- 8: through-hole area of the positionable part
- 9: thermal paste
- 10: air inlet
- 11: air flow trajectory
- 12: connection actuator coils with regulator
- 13: spring support
- 14: case
- 15: base
- 16: leaf spring

The present invention is in no way limited to the embodiments described in the examples and/or shown in the figures. On the contrary, methods according to the present invention may be realized in many different ways without departing from the scope of the invention.

## Claims

1. A device (1) for positioning an optical element, having improved temperature management, the device comprising:
- a substantially flat, positionable part (3) to which the optical element can be mounted at a first side of the positionable part;
- a base part (15);
- a suspension system (16), said positionable part being mounted on said base part in a movable manner with said suspension system, wherein the positionable part is facing the base part with a second side opposite to the first side; and
- an actuation system (5) for actuating movement of said positionable part with respect to said base part, and
- a control system (7) for controlling movement of said positionable part;
**characterized in that**, the optical element comprises a mirror (4), and the device comprises a contactless temperature sensor (6) for measuring the temperature of the optical element, said sensor being positioned behind the positionable part with respect to the optical element, and is oriented towards the optical element.

2. The device according to claim 1, **characterized in that**, the contactless temperature sensor is located in a substantially central hole through the base part, preferably in an axial cavity in the base part.

3. The device according to previous claim 2, **characterized in that**, the positionable part comprises at least one, preferably multiple, centrally-positioned through-hole, said through-hole preferably being positioned within the boundaries of a projection of the optical element perpendicularly onto the positionable part.

4. The device according to any of the previous claims, **characterized in that**, the positionable part comprises a plurality of actuator coils at a peripheral zone thereof, and one or more magnets, preferably permanent magnets, mounted on the base part near said actuator coils, preferably essentially longitudinally next to said actuator coils, wherein the through-holes are positioned in a central zone of the positionable part, surrounded by the peripheral zone.

5. The device according to previous claim 3-4, **characterized in that**, the at least one through-hole of the positionable part has a diameter of at least 0.25 mm, preferably at least 0.50 mm.

6. The device according to any of the previous claims 2-5, **characterized in that**, the contactless sensor is oriented towards at least one of the through-holes of the positionable part.

7. The device according to any of the previous claims, **characterized in that**, the contactless temperature sensor is a contactless infrared temperature sensor, and preferably a pyrometer.

8. The device according to any of the previous claims, **characterized in that**, at least three through-holes are comprised in the positionable part, said through-holes being positioned symmetrically in the central part of the positionable part.

9. The device according to any of the previous claims, **characterized in that**, the device further comprises a layer of thermal paste between optical element and the positionable part, said layer covering at least the through-holes of the positionable part.

10. The device according to any of the previous claims, **characterized in that**, the positionable part comprises a thermally conductive, preferably metal, plate at the first side facing the optical element, and a thermally conductive, preferably metal, plate at the second side facing away from the optical element, and wherein said thermally conductive plates on the first and second sides are thermally connected through the positionable part via at least one, and preferably a plurality of, thermally conductive connections in the through-holes, preferably thermal vertical interconnect accesses (vias), and wherein said temperature sensor is oriented towards the thermally conductive plate on the second side.

11. The device according to any of the previous claims, **characterized in that**, the device further includes a layer of thermal paste between optical element and the positionable part, said layer covering at least the through-holes of the positionable part, the positionable part comprising a thermally conductive, preferably metal, plate at the first side facing the optical element, and a thermally conductive, preferably metal, plate at the second side facing away from the optical element, and wherein said thermally conductive plates on the first and second sides are thermally connected through the positionable part via at least one, and preferably a plurality of, thermally conductive connections in the through-holes, preferably thermal vertical interconnect accesses (vias), and wherein said temperature sensor is oriented towards the thermally conductive plate on the second side.

12. The device according to any of the previous claims, **characterized in that**, the device is configured for sending a shutdown signal to an associated light-emitting device, preferably a laser device, irradiating the optical element, if the measured temperature of the optical element exceeds a predetermined temperature, or that the device, comprising a light-emitting device irradiating the optical element, is configured for sending the measured temperature itself to the light-emitting device, which itself is configured to shut down upon detecting that the measured temperature exceeds the predetermined temperature stored at the light-emitting device, or a system associated thereto.

13. The device according any of the previous claims, **characterized in that**, the device comprises an airflow generating element configured for generating an airflow at and through the through-holes, for cooling the optical element, said airflow generating element preferably positioned at the base part, more preferably in an axial cavity thereof.

14. The device according to any of the previous claims, **characterized in that**, wherein the device comprises an airflow generating element configured for generating an airflow aimed at the second side of the positionable part, said airflow generating element positioned behind the positionable part with respect to the optical element, and preferably positioned at the base part, more preferably in an axial cavity thereof.

15. Method for temperature management of an optical system comprising a positionable optical element, a light-emitting device, preferably a laser device, for generating a light beam, and a device according to any one of the preceding claim, the method comprising the steps of:
a. measuring the temperature with the contactless temperature sensor;
b. processing the measured temperature;
c. taking action upon detection of the measured temperature exceeding a predetermined threshold temperature, wherein the action is associated to the operation of the light-emitting device, and is preferably a shutdown of its operation.

## Patentansprüche

1. Vorrichtung (1) zum Positionieren eines optischen Elements, die ein verbessertes Temperaturmanagement aufweist, wobei die Vorrichtung Folgendes umfasst:
- einen im Wesentlichen ebenen, positionierbaren Teil (3), an dem das optische Element an einer ersten Seite des positionierbaren Teils montiert werden kann;
- einen Basisteil (15);
- ein Aufhängungssystem (16), wobei der positionierbare Teil auf bewegliche Weise mit dem Aufhängungssystem auf dem Basisteil montiert ist, wobei der positionierbare Teil mit einer zweiten Seite, die der ersten Seite gegenüberliegt, zum Basisteil weist; und
- ein Betätigungssystem (5) zum Betätigen einer Bewegung des positionierbaren Teils in Bezug auf den Basisteil, und
- ein Steuersystem (7) zum Steuern der Bewegung des positionierbaren Teils;
**dadurch gekennzeichnet, dass** das optische Element einen Spiegel (4) umfasst und die Vorrichtung einen kontaktlosen Temperatursensor (6) zum Messen der Temperatur des optischen Elements umfasst, wobei der Sensor in Bezug auf das optische Element hinter dem positionierbaren Teil positioniert ist und hin zum optischen Element ausgerichtet ist.

2. Vorrichtung nach Anspruch 1, **dadurch gekennzeichnet, dass** sich der kontaktlose Temperatursensor in einer im Wesentlichen mittigen Öffnung durch den Basisteil befindet, vorzugsweise in einem axialen Hohlraum in dem Basisteil.

3. Vorrichtung nach dem vorhergehenden Anspruch 2, **dadurch gekennzeichnet, dass** der positionierbare Teil mindestens eine, vorzugsweise mehrere, mittig positionierte Durchgangsöffnung umfasst, wobei die Durchgangsöffnung vorzugsweise innerhalb der Grenzen einer Projektion des optischen Elements senkrecht auf den positionierbaren Teil positioniert ist.

4. Vorrichtung nach einem der vorhergehenden Ansprüche, **dadurch gekennzeichnet, dass** der positionierbare Teil an seiner Außenumfangszone mehrere Betätigungsspulen umfasst und einen oder mehrere Magnete, vorzugsweise Dauermagnete, die nahe den Betätigungsspulen, vorzugsweise im Wesentlichen in Längsrichtung neben den Betätigungsspulen, an dem Basisteil montiert sind, wobei die Durchgangsöffnungen in einer mittigen Zone des positionierbaren Teils positioniert sind, umgeben von der Außenumfangszone.

5. Vorrichtung nach einem der vorhergehenden Ansprüche 3 bis 4, **dadurch gekennzeichnet, dass** die mindestens eine Durchgangsöffnung des positionierbaren Teil einen Durchmesser von mindestens 0,25 mm, vorzugsweise mindestens 0,50 mm, aufweist.

6. Vorrichtung nach einem der vorhergehenden Ansprüche 2 bis 5, **dadurch gekennzeichnet, dass** der kontaktlose Sensor hin zu mindestens einer der Durchgangsöffnung des positionierbaren Teils ausgerichtet ist.

7. Vorrichtung nach einem der vorhergehenden Ansprüche, **dadurch gekennzeichnet, dass** der kontaktlose Temperatursensor ein kontaktloser Infrarot-Temperatursensor und vorzugsweise ein Pyrometer ist.

8. Vorrichtung nach einem der vorhergehenden Ansprüche, **dadurch gekennzeichnet, dass** in dem positionierbaren Teil mindestens drei Durchgangsöffnungen enthalten sind, wobei die Durchgangsöffnungen symmetrisch in dem mittigen Teil des positionierbaren Teils angeordnet sind.

9. Vorrichtung nach einem der vorhergehenden Ansprüche, **dadurch gekennzeichnet, dass** die Vorrichtung ferner eine Schicht aus Wärmeleitpaste zwischen optischem Element und dem positionierbaren Teil umfasst, wobei die Schicht mindestens die Durchgangsöffnungen des positionierbaren Teils bedeckt.

10. Vorrichtung nach einem der vorhergehenden Ansprüche, **dadurch gekennzeichnet, dass** der positionierbare Teil eine wärmeleitende, vorzugsweise metallene, Platte an der ersten Seite, die zum optischen Element weist, umfasst und eine wärmeleitende, vorzugsweise metallene, Platte an der zweiten Seite, die von dem optischen Element weg weist, und wobei die wärmeleitenden Platten an der ersten und der zweiten Seite durch den positionierbaren Teil mittels mindestens einer und vorzugsweise mehrerer wärmeleitender Verbindungen in den Durchgangsöffnungen thermisch verbunden sind, vorzugsweise durch thermische vertikale Durchkontaktierungen (Vias), und wobei der Temperatursensor hin zu der wärmeleitenden Platte an der zweiten Seite ausgerichtet ist.

11. Vorrichtung nach einem der vorhergehenden Ansprüche, **dadurch gekennzeichnet, dass** die Vorrichtung ferner eine Schicht aus Wärmeleitpaste zwischen dem optischen Element und dem positionierbaren Teil beinhaltet, wobei die Schicht mindestens die Durchgangsöffnungen des positionierbaren Teils bedeckt, wobei der positionierbare Teil eine wärmeleitende, vorzugsweise metallene, Platte an der ersten Seite, die zum optischen Element weist, umfasst und eine wärmeleitende, vorzugsweise metallene, Platte an der zweiten Seite, die von dem optischen Element weg weist, und wobei die wärmeleitenden Platten der ersten und der zweiten Seite durch den positionierbaren Teil mittels mindestens einer und vorzugsweise mehrerer wärmeleitender Verbindungen in den Durchgangsöffnungen thermisch verbunden sind, vorzugsweise durch thermische vertikale Durchkontaktierungen (Vias), und wobei der Temperatursensor hin zu der wärmeleitenden Platte an der zweiten Seite ausgerichtet ist.

12. Vorrichtung nach einem der vorhergehenden Ansprüche, **dadurch gekennzeichnet, dass** die Vorrichtung dafür konfiguriert ist, ein Abschaltungssignal an eine zugeordnete lichtemittierende Vorrichtung, vorzugsweise eine Laservorrichtung, die das optische Element anstrahlt, zu senden, wenn die gemessene Temperatur des optischen Elements eine festgelegte Temperatur überschreitet, oder dass die Vorrichtung, die eine lichtemittierende Vorrichtung umfasst, welche das optische Element anstrahlt, dafür konfiguriert ist, die gemessene Temperatur selbst an die lichtemittierende Vorrichtung zu senden, die selbst dafür konfiguriert ist, sich auf das Erkennen hin, dass die gemessene Temperatur die an der lichtemittierenden Vorrichtung oder einem ihr zugeordneten System gespeicherte festgelegte Temperatur überschreitet, selbst abzuschalten.

13. Vorrichtung nach einem der vorhergehenden Ansprüche, **dadurch gekennzeichnet, dass** die Vorrichtung ein luftstromerzeugendes Element umfasst, das dafür konfiguriert ist, einen Luftstrom an den und durch die Durchgangsöffnungen zu erzeugen, um das optische Element zu kühlen, wobei das luftstromerzeugende Element vorzugsweise an dem Basisteil positioniert ist, bevorzugter in einem axialen Hohlraum desselben.

14. Vorrichtung nach einem der vorhergehenden Ansprüche, **dadurch gekennzeichnet, dass**, wobei die Vorrichtung ein luftstromerzeugendes Element umfasst, das dafür konfiguriert ist, einen Luftstrom zu erzeugen, der auf die zweite Seite des positionierbaren Teils gerichtet ist, wobei das luftstromerzeugende Element in Bezug auf das optische Element hinter dem positionierbaren Teil positioniert ist und vorzugsweise an dem Basisteil positioniert ist, bevorzugter in einem axialen Hohlraum desselben.

15. Verfahren zum Temperaturmanagement eines optischen Systems, das ein positionierbares optisches Element, eine lichtemittierende Vorrichtung, vorzugsweise eine Laservorrichtung, zum Erzeugen eines Lichtstrahls und eine Vorrichtung nach einem der vorhergehenden Ansprüche umfasst, wobei das Verfahren die folgenden Schritte umfasst:
a. Messen der Temperatur mit dem kontaktlosen Temperatursensor;
b. Verarbeiten der gemessenen Temperatur;
c. Ergreifen einer Maßnahme auf das Erkennen hin, dass die gemessene Temperatur einen festgelegten Temperaturschwellenwert überschreitet, wobei die Maßnahme dem Betrieb der lichtemittierenden Vorrichtung zugeordnet ist und vorzugsweise ein Abschalten ihres Betriebes ist.

## Revendications

1. Dispositif (1) de positionnement d'un élément optique, possédant une gestion thermique améliorée, le dispositif comprenant :
- une partie positionnable sensiblement plane (3) sur laquelle l'élément optique peut être monté sur un premier côté de ladite partie positionnable ;
- une partie de base (15) ;
- un système de suspension (16), ladite partie positionnable étant montée sur ladite partie de base de manière mobile à l'aide dudit système de suspension, dans lequel la partie positionnable fait face à la partie de base avec un second côté opposé au premier côté ; et
- un système d'actionnement (5) pour actionner le mouvement de ladite partie positionnable par rapport à ladite partie de base, et
- un système de commande (7) pour commander le mouvement de ladite partie mobile ;
**caractérisé en ce que**, l'élément optique comprend un miroir (4), et le dispositif comprend un capteur de température sans contact (6) pour mesurer la température de l'élément optique, ledit capteur étant positionné derrière la partie positionnable par rapport à l'élément optique, et est orienté vers l'élément optique.

2. Dispositif selon la revendication 1, **caractérisé en ce que**, le capteur de température sans contact est situé dans un trou sensiblement central à travers la partie de base, de préférence dans une cavité axiale dans la partie de base.

3. Dispositif selon la revendication 2 ci-dessus, **caractérisé en ce que**, la partie positionnable comprend au moins un trou traversant, de préférence plusieurs, positionné centralement, ledit trou traversant étant de préférence positionné dans les limites d'une projection de l'élément optique perpendiculairement sur la partie positionnable.

4. Dispositif selon l'une quelconque des revendications précédentes, **caractérisé en ce que**, la partie positionnable comprend une pluralité de bobines d'actionnement situées dans une zone périphérique de celle-ci, et un ou plusieurs aimants, de préférence des aimants permanents, montés sur la partie de base à proximité desdites bobines d'actionnement, de préférence essentiellement longitudinalement à côté desdites bobines d'actionnement, dans lequel les trous traversants sont positionnés dans une zone centrale de la partie positionnable, entourée par la zone périphérique.

5. Dispositif selon la revendication 3 ou 4 ci-dessus, **caractérisé en ce que**, l'au moins un trou traversant de la partie positionnable a un diamètre d'au moins 0,25 mm, de préférence d'au moins 0,50 mm.

6. Dispositif selon l'une quelconque des revendications 2 à 5 précédentes, **caractérisé en ce que**, le capteur sans contact est orienté vers au moins l'un des trous traversants de la partie positionnable.

7. Dispositif selon l'une quelconque des revendications précédentes, **caractérisé en ce que**, le capteur de température sans contact est un capteur de température infrarouge sans contact, et de préférence un pyromètre.

8. Dispositif selon l'une quelconque des revendications précédentes, **caractérisé en ce que**, au moins trois trous traversants sont compris dans la partie positionnable, lesdits trous traversants étant positionnés symétriquement dans la partie centrale de la partie positionnable.

9. Dispositif selon l'une quelconque des revendications précédentes, **caractérisé en ce que**, le dispositif comprend en outre une couche de pâte thermique entre l'élément optique et la partie positionnable, ladite couche recouvrant au moins les trous traversants de la partie positionnable.

10. Dispositif selon l'une quelconque des revendications précédentes, **caractérisé en ce que**, la partie positionnable comprend une plaque thermoconductrice, de préférence métallique, sur le premier côté faisant face à l'élément optique, et une plaque thermoconductrice, de préférence métallique, sur le second côté orienté à l'opposé de l'élément optique, et dans lequel lesdites plaques thermoconductrices sur les premier et second côtés sont reliées thermiquement à travers la partie positionnable par l'intermédiaire d'au moins une, et de préférence d'une pluralité de, connexions thermoconductrices dans les trous traversants, de préférence des accès d'interconnexion thermiques verticaux (trous d'interconnexion), et dans lequel ledit capteur de température est orienté vers la plaque thermoconductrice située sur le second côté.

11. Dispositif selon l'une quelconque des revendications précédentes, **caractérisé en ce que**, le dispositif comporte en outre une couche de pâte thermique entre l'élément optique et la partie positionnable, ladite couche recouvrant au moins les trous traversants de la partie positionnable, la partie positionnable comprenant une plaque thermoconductrice, de préférence métallique, sur le premier côté faisant face à l'élément optique, et une plaque thermoconductrice, de préférence métallique, sur le second côté orienté à l'opposé à l'élément optique, et dans lequel lesdites plaques thermoconductrices sur les premier et second côtés sont reliées thermiquement à travers la partie positionnable par l'intermédiaire d'au moins une, et de préférence d'une pluralité de, connexions thermoconductrices dans les trous traversants, de préférence des accès d'interconnexion thermiques verticaux (trous d'interconnexion), et dans lequel ledit capteur de température est orienté vers la plaque thermoconductrice située sur le second côté.

12. Dispositif selon l'une quelconque des revendications précédentes, **caractérisé en ce que**, le dispositif est configuré pour envoyer un signal d'arrêt à un dispositif émetteur de lumière associé, de préférence un dispositif laser, irradiant l'élément optique, si la température mesurée de l'élément optique dépasse une température prédéterminée, ou **en ce que** le dispositif, comprenant un dispositif émetteur de lumière irradiant l'élément optique, est configuré pour transmettre lui-même la température mesurée au dispositif émetteur de lumière, qui est lui-même configuré pour s'arrêter dès qu'il est détecté que la température mesurée dépasse la température prédéterminée stockée dans le dispositif émetteur de lumière, ou dans un système qui lui est associé.

13. Dispositif selon l'une quelconque des revendications précédentes, **caractérisé en ce que**, le dispositif comprend un élément générateur de flux d'air configuré pour générer un flux d'air au niveau et à travers les trous traversants, pour refroidir l'élément optique, ledit élément générateur de flux d'air étant de préférence positionné au niveau de la partie de base, et plus préférentiellement dans une cavité axiale de celle-ci.

14. Dispositif selon l'une quelconque des revendications précédentes, **caractérisé en ce que**, dans lequel le dispositif comprend un élément générateur de flux d'air configuré pour générer un flux d'air dirigé vers le second côté de la partie positionnable, ledit élément générateur de flux d'air étant positionné derrière la partie positionnable par rapport à l'élément optique, et de préférence positionné au niveau de la partie de base, et plus préférentiellement dans une cavité axiale de celle-ci.

15. Procédé de gestion de température d'un système optique comprenant un élément optique positionnable, un dispositif émetteur de lumière, de préférence un dispositif laser, pour générer un faisceau lumineux, et un dispositif selon l'une quelconque des revendications précédentes, le procédé comprenant les étapes consistant à :
a. mesurer la température à l'aide du capteur de température sans contact ;
b. traiter la température mesurée ;
c. prendre une mesure dès que la température mesurée dépasse une température seuil prédéterminée, dans lequel la mesure est associée au fonctionnement du dispositif émetteur de lumière, et consiste de préférence à interrompre son fonctionnement.
